# FASCICULE DE BREVET EUROPEEN

(11) **EP 4 149 657 B1**
(45) Date de publication et mention de la délivrance du brevet: **03.07.2024**
(21) Numéro de dépôt: 21725140.4
(22) Date de dépôt: 10.05.2021
(51) Int. Cl.: B01D 53/14, B01D 53/56

(54) **ÉLIMINATION D'OXYDES D'AZOTE GAZEUX D'UN FLUIDE GAZEUX**
ENTFERNUNG VON GASFÖRMIGEN STICKOXIDEN AUS EINEM GASFÖRMIGEN FLUID
REMOVING GASEOUS NITROGEN OXIDES FROM A GASEOUS FLUID

(30) Priorité: 10.05.2020 FR 2004617
(43) Date de publication de la demande: 22.03.2023
(73) Titulaire: Commissariat à l'Energie Atomique et aux Energies Alternatives, 75015 Paris (FR)
(72) Inventeur: ROUSSEY, Arthur, 38054 GRENOBLE CEDEX 09 (FR); DELLEA, Olivier, 38054 GRENOBLE CEDEX 09 (FR); GELINEAU, Guillaume, 38054 GRENOBLE CEDEX 09 (FR); PONCELET, Olivier, 38054 GRENOBLE CEDEX 09 (FR)
(74) Mandataire: Cabinet Nony
(86) Numéro de dépôt international: PCT/EP2021/062378
(87) Numéro de publication internationale: WO 2021/228791

(56) Documents cités:
- CN-A- 108 993 125
- CN-B- 107 485 969
- YING SUN ET AL: "Highly Efficient Absorption of NO by Amine-Based Functional Deep Eutectic Solvents", ENERGY & FUELS, vol. 34, no. 1, 16 janvier 2020 (2020-01-16), pages 690-697, XP055763667, WASHINGTON, DC, US. ISSN: 0887-0624, DOI: 10.1021/acs.energyfuels.9b03335
- SIMONE L. WAITE ET AL: "NO 2 Solvation Structure in Choline Chloride Deep Eutectic Solvents-The Role of the Hydrogen Bond Donor", JOURNAL OF PHYSICAL CHEMISTRY PART B, vol. 122, no. 15, 19 avril 2018 (2018-04-19), pages 4336-4344, XP055763077, US ISSN: 1520-6106, DOI: 10.1021/acs.jpcb.8b01508 cité dans la demande
- LUHONG ZHANG ET AL: "Efficient and Reversible Nitric Oxide Absorption by Low-Viscosity, Azole-Derived Deep Eutectic Solvents", JOURNAL OF CHEMICAL AND ENGINEERING DATA., vol. 64, no. 7, 11 juillet 2019 (2019-07-11), pages 3068-3077, XP055763670, US ISSN: 0021-9568, DOI: 10.1021/acs.jced.9b00173
- JINXIAO DOU ET AL: "Mechanistic Study of Selective Absorption of NO in Flue Gas Using EG-TBAB Deep Eutectic Solvents", ENVIRONMENTAL SCIENCE & TECHNOLOGY, vol. 53, no. 2, 15 janvier 2019 (2019-01-15), pages 1031-1038, XP055763037, US ISSN: 0013-936X, DOI: 10.1021/acs.est.8b05408 cité dans la demande
- ZAITUN GHAZALI ET AL: "Impregnating deep eutectic solvent choline chloride:urea:polyethyleneimine onto mesoporous silica gel for carbon dioxide capture", JOURNAL OF MATERIALS RESEARCH AND TECHNOLOGY, vol. 9, no. 3, 13 février 2020 (2020-02-13), pages 3249-3260, XP055764257, BR ISSN: 2238-7854, DOI: 10.1016/j.jmrt.2020.01.073
- YU CHEN ET AL: "Capture of Toxic Gases by Deep Eutectic Solvents", ACS SUSTAINABLE CHEMISTRY & ENGINEERING, vol. 8, no. 14, 13 avril 2020 (2020-04-13) , pages 5410-5430, XP055763665, US ISSN: 2168-0485, DOI: 10.1021/acssuschemeng.0c01493
- ZAITUN GHAZALI ET AL: "Immobilization of Choline Chloride: Urea onto Mesoporous Silica for Carbon Dioxide Capture", SAINS MALAYSIANA : JOURNAL OF NATURAL SCIENCES, vol. 48, no. 5, 31 mai 2019 (2019-05-31), pages 1025-1033, XP055764766, ISSN: 0126-6039, DOI: 10.17576/jsm-2019-4805-11

## Description

### Domaine technique

La présente invention se rapporte au traitement des fluides gazeux en vue de les purifier des polluants gazeux, et plus particulièrement des oxydes d'azote gazeux (NOx).

### Technique antérieure

Les NOx sont des polluants gazeux préoccupants en raison de leur impact sanitaire et environnemental. Les NOx sont principalement issus des procédés de combustion pendant lesquels du monoxyde d'azote (NO) est formé, celui-ci se transformant en présence d'oxygène en dioxyde d'azote (NO₂). Ces polluants gazeux sont irritants pour les voies respiratoires et toxiques. De plus, ils favorisent la formation d'ozone, contribuent à la formation des pluies acides et jouent un rôle dans la formation de particules fines.

Les seuils limites, fixés par l'ANSES, étant régulièrement dépassés, il importe de réduire les niveaux d'exposition aux NOx.

Les niveaux d'exposition peuvent d'une part être réduits par filtration d'effluents industriels de combustion, le NO y étant majoritaire parmi les NOx, afin de limiter la libération de ces composés dans l'atmosphère. Typiquement, le NO₂ est présent dans les effluents industriels de combustion dans des proportions de l'ordre de 10% par rapport aux NOx.

Par ailleurs, les nouvelles contraintes réglementaires sur la consommation énergétique du bâtiment conduisent à un taux de renouvellement d'air faible dans les bâtiments et posent donc le problème de la purification de leur atmosphère intérieure. Il est en effet généralement constaté dans l'air ambiant des espaces confinés, une accumulation de particules solides (générées par le chauffage urbain, la circulation de l'air ambiant dans des gaines de ventilation ou l'usure des pâles des ventilateurs, voire la combustion incomplète des carburants dans le cas des parkings couverts par exemple), de bio-contaminants comme les micro-organismes (virus et bactéries) et les allergènes, et de polluants chimiques gazeux (issus de la désorption des produits de l'habitat, provenant de l'extérieur (NOx, Ozone, dioxine, aromatiques) et/ou générés par les usagers de ces espaces (cosmétiques, respiration, etc..)).

Une meilleure filtration de l'air, et plus particulièrement des NOx, dans les espaces confinés tels que l'habitat (par exemple les bureaux, le domicile, les écoles) ou les transports (par exemple l'habitacle des véhicules automobiles, le métro, les gares, les tunnels) permettrait donc de réduire les risques sanitaires. Dans ce but, il est nécessaire de mettre en oeuvre des technologies de filtration efficaces pour des gammes de concentration de l'ordre de 10 à 1000 µg/m³, à température ambiante et à pression atmosphérique. De plus, la filtration de l'air de ces espaces confinés diffère d'une filtration d'effluents industriels en ce que le NO₂ y est le gaz majoritaire parmi les NOx, notamment dans des proportions de l'ordre de 40% à 80% par rapport aux NOx.

Or, les matériaux classiques de filtration des gaz tels que les charbons actifs, les zéolithes ou les composés basiques (oxydes ou hydroxydes alcalins ou alcalino-terreux) ont des efficacités très faibles en filtration du NO₂ dans ces conditions, notamment à basse température (<200°C), même en utilisant des quantités importantes de ces matériaux. De plus, ces composés basiques étant également corrosifs, ils sont difficiles à mettre en oeuvre, notamment en présence d'humidité.

Il existe donc un besoin d'introduire de nouveaux matériaux pour la filtration des NOx, en particulier dans les espaces confinés.

Ainsi, la triéthanolamine a déjà été caractérisée comme étant efficace pour piéger du NO₂ ([1], [2] et [3]). En particulier, lorsque la triéthanolamine est imprégnée sur un support, tel que des fibres de verre ou de cellulose, elle réagit avec le NO₂ de l'air ambiant. Cependant, l'adsorption du NO₂ par la triéthanolamine est majoritairement réversible, ce qui pose le problème du relargage du NO₂ dans l'air ambiant après son piégeage. De plus, le point de fusion de la triéthanolamine est de 21,6°C, ce qui est préjudiciable à l'efficacité d'adsorption à des températures pour lesquelles la triéthanolamine est solide.

Par ailleurs, des solvants eutectiques profonds (DESs) tels que décrits dans le document [4] ont été proposés pour le piégeage de NOx. Les DESs allient avantageusement à la fois les propriétés physico-chimiques intéressantes des liquides ioniques avec l'avantage d'être plus respectueux de l'environnement, et plus simples à mettre en oeuvre.

Ainsi, des DESs à base de 1,3-diméthylthiourée [5], ou bien formés d'éthylène glycol et de bromure de tétrabutylammonium [6], testés pour des mélanges gazeux très concentrés en NO et donc non représentatifs de l'air ambiant, ont révélé une capacité à absorber du NO, mais malheureusement de façon réversible.

Il a été également proposé par une étude numérique de dynamique moléculaire que des DESs à base de chlorure de choline combiné à de l'urée, de la méthyl-urée ou de la thio-urée seraient intéressants pour des procédés de dénitrification par adsorption de NO₂ [7]. Cependant, aucun résultat expérimental indiquant la performance d'adsorption de ces DESs n'est apporté. De plus, les DESs comprenant de l'urée ne sont pas adaptés pour le traitement de l'air, notamment de l'air intérieur, car celle-ci se décompose en ammoniac, qui est un composé toxique et fortement odorant.

Le document [8] divulgue l'utilisation d'un DES comprenant un sel halogéné d'ammonium et un alcool polyhydrique pour piéger l'oxyde nitrique.

Enfin, [9] décrit l'imprégnation d'un solvant eutectique profond (chlorure de choline:urée:polyéthylèneimine) sur un support de gel de silice mésoporeux pour la capture du dioxyde de carbone.

La présente invention vise donc à titre principal à proposer un nouveau matériau pour piéger les NOx, et notamment le NO₂, dénué des inconvénients et des insuffisances précités.

En particulier, l'un des objectifs de l'invention est de proposer un matériau permettant de piéger efficacement les NOx dans des conditions de température, pression et concentration adaptées aux espaces confinés tels que l'habitat ou les transports.

Un autre objectif de l'invention est de disposer d'un matériau de piégeage des NOx qui permette de réduire voire empêcher leur relargage dans l'air ambiant après leur piégeage. Un autre objectif de l'invention est de fournir un matériau de piégeage des oxydes d'azote qui ne soit pas toxique, et qui soit simple à synthétiser.

De manière inattendue, les inventeurs ont aujourd'hui découvert que des DESs à base d'alcanolamines peuvent être mis en oeuvre à titre d'élément capteur de NOx avec une capacité de relargage significativement amoindrie et en étant aptes à fonctionner en atmosphère ambiante, sous réserve de combiner ces alcanolamines à un composé annexe.

### Exposé de l'invention

Ainsi, la présente invention concerne, selon un premier aspect, l'utilisation d'un solvant eutectique profond (DES) comprenant au moins :
- un sel halogéné d'ammonium, de phosphonium ou de sulfonium, et
- un composé de formule (I) R₁R₂R₃N avec

R₁ étant un radical alkyle linéaire ou ramifié en C₁ à C₅ substitué par un ou plusieurs groupe(s) hydroxyle(s),
R₂ et R₃ étant indépendamment l'un de l'autre choisis parmi un atome d'hydrogène et un radical alkyle linéaire ou ramifié en C₁ à C₅ pouvant être substitué par un ou plusieurs groupe(s) hydroxyle(s),
pour piéger au moins un oxyde d'azote gazeux dit NOx.

Les inventeurs ont ainsi découvert qu'il est possible d'adsorber efficacement des NOx, notamment du NO₂, par des DESs conformes à l'invention dans des conditions de pression, de température et dans des gammes de concentration représentatives de l'air ambiant, extérieur ou intérieur, en particulier en condition de pollution atmosphérique.

Contre toute attente, les inventeurs ont aussi constaté que la combinaison d'un composé de formule (I) avec au moins un sel halogéné d'ammonium, de phosphonium ou de sulfonium permet de former un DES particulièrement efficace à titre d'élément capteur de NOx et dont l'efficacité d'adsorption est avantageusement supérieure à celle d'un composé de formule (I) seul.

De plus, l'adsorption d'un DES conforme à l'invention est pour l'essentiel avantageusement irréversible même à des températures plus élevées que la température ambiante. Il est constaté une réduction très significative du relargage des NOx dans l'air ambiant après leur capture.

A titre représentatif des oxydes d'azote NOx visés par l'invention, peuvent être cités le dioxyde d'azote (NO₂), le monoxyde d'azote (NO), le protoxyde d'azote (N₂O), le peroxyde d'azote (N₂O₄), le pentoxyde d'azote (N₂O₅) et l'acide nitrique (HNO₃).

Dans la description de l'invention, l'expression « sel halogéné » se rapporte à un « sel halogéné d'ammonium, de phosphonium ou de sulfonium ».

Selon un autre aspect, l'invention a trait à un système de filtration de fluide gazeux comportant au moins un support solide poreux et au moins un solvant eutectique profond à titre d'élément capteur d'oxyde d'azote gazeux (NOx), le solvant eutectique profond comprenant au moins :
- un sel halogéné d'ammonium, de phosphonium ou de sulfonium, et
- un composé de formule (I) R₁R₂R₃N avec

R₁ étant un radical alkyle linéaire ou ramifié en C₁ à C₅ substitué par un ou plusieurs groupe(s) hydroxyle(s),
R₂ et R₃ étant indépendamment l'un de l'autre choisis parmi un atome d'hydrogène et un radical alkyle linéaire ou ramifié en C₁ à C₅ pouvant être substitué par un ou plusieurs groupe(s) hydroxyle(s),
avec ledit solvant eutectique profond étant immobilisé sur ledit support solide poreux.

L'invention concerne, selon un autre aspect, un procédé de purification d'un fluide gazeux susceptible de contenir un oxyde d'azote gazeux (NOx), ledit procédé comprenant au moins les étapes consistant à :
(a) disposer d'au moins un solvant eutectique profond immobilisé sur un support solide poreux, ledit solvant eutectique profond comprenant au moins :
   - un sel halogéné d'ammonium, de phosphonium ou de sulfonium, et
   - un composé de formule (I) R₁R₂R₃N avec
      R₁ étant un radical alkyle linéaire ou ramifié en C₁ à C₅ substitué par un ou plusieurs groupe(s) hydroxyle(s),
      R₂ et R₃ étant indépendamment l'un de l'autre choisis parmi un atome d'hydrogène et un radical alkyle linéaire ou ramifié en C₁ à C₅ pouvant être substitué par un ou plusieurs groupe(s) hydroxyle(s),
(b) mettre en contact ledit solvant eutectique profond de l'étape (a) avec ledit fluide gazeux dans des conditions propices au piégeage d'oxyde d'azote gazeux (NOx).

### Description détaillée

### Solvant eutectique profond (DES)

Comme précisé ci-dessus, la présente invention met en oeuvre à titre d'élément capteur de NOx, un DES combinant au moins un composé de formule (I) à un sel halogéné d'ammonium, de phosphonium ou de sulfonium.

Structurellement, les DESs sont généralement composés de deux ou trois constituants qui sont capables d'auto-association, souvent par des liaisons hydrogène, pour former un mélange eutectique présentant un point de fusion inférieur à celui de chaque constituant pris individuellement. Ils consistent généralement en un mélange d'un composé accepteur de liaison hydrogène (également nommé HBA) et d'un composé donneur de liaison hydrogène (également nommé HBD).

Ces matériaux possèdent des propriétés physico-chimiques similaires aux liquides ioniques, à savoir une très faible tension de vapeur. Ils sont donc non volatils, généralement incapables de générer des produits volatils jusqu'à 200°C et dénués d'odeur. En revanche, les DESs sont, de manière avantageuse, et à la différence des liquides ioniques, généralement biodégradables. De plus, leur procédé de préparation est plus simple, moins coûteux et en particulier ne nécessite aucune étape de purification.

Le DES considéré comprend au moins :
- un sel halogéné d'ammonium, de phosphonium ou de sulfonium, et
- un composé de formule (I) R₁R₂R₃N avec

R₁ étant un radical alkyle linéaire ou ramifié en C₁ à C₅ substitué par un ou plusieurs groupe(s) hydroxyle(s),
R₂ et R₃ étant indépendamment l'un de l'autre choisis parmi un atome d'hydrogène et un radical alkyle linéaire ou ramifié en C₁ à C₅ pouvant être substitué par un ou plusieurs groupe(s) hydroxyle(s).

Le DES utilisé dans l'invention présente les propriétés usuelles des DESs, à savoir l'avantage d'être non toxique, biodégradable, non volatil et non inflammable. De plus, ce DES piège de façon efficace et majoritairement irréversible des NOx, en particulier le NO₂, même en présence d'humidité et de CO₂, à des conditions de température, de pression et de concentration typiquement retrouvées dans l'air extérieur et/ou l'air ambiant des espaces confinés.

En particulier, le DES peut comprendre un ou plusieurs composés de formule (I) et un ou plusieurs sels halogénés d'ammonium, de phosphonium ou de sulfonium.

Le rapport molaire entre le(s) composé(s) de formule (I) et le(s) sel(s) halogéné(s) est susceptible de varier selon la nature de chacun de ces deux types de composés. En particulier, le rapport molaire optimal dépend des interactions entre le(s) composé(s) de formule (I) et le(s) sel(s) halogéné(s).

Par exemple, le rapport molaire composé(s) de formule (I) / sel(s) halogéné(s) d'ammonium, de phosphonium ou de sulfonium peut être compris entre 20:1 et 1:1, de préférence entre 3:1 et 1:1, et plus préférentiellement égal à 2:1.

Le sel halogéné peut être un fluorure, un chlorure, un bromure ou un iodure, en particulier un chlorure ou un bromure. De préférence, le sel halogéné d'ammonium, de phosphonium ou de sulfonium est un chlorure d'ammonium, de phosphonium ou de sulfonium.

Le sel halogéné peut être un sel halogéné d'ammonium primaire, secondaire, tertiaire ou quaternaire. Le sel halogéné peut être par exemple de formule R¹R²R³R⁴N⁺A⁻, avec A un atome d'halogène et R¹, R², R³ et R⁴ étant indépendamment les uns des autres un atome d'hydrogène ou une chaîne hydrocarbonée linéaire ou ramifiée en C₁ à C₅ pouvant être substituée. En particulier, la ou les chaîne(s) hydrocarbonée(s) peuvent être substituées par un ou plusieurs groupes hydroxyles, phényles, -COOH, -C(O)OR', -OR' avec R' étant un radical alkyle en C₁ à C₅, -COCl, -OCOCl, -Cl ou -F.

Le sel halogéné peut aussi être un sel halogéné de phosphonium primaire, secondaire, tertiaire ou quaternaire. Le sel halogéné peut être par exemple de formule R¹R²R³R⁴P⁺A⁻, avec A un atome d'halogène et R¹, R², R³ et R⁴ étant indépendamment les uns des autres un atome d'hydrogène ou une chaîne hydrocarbonée linéaire ou ramifiée en C₁ à C₅ pouvant être substituée. En particulier, la ou les chaîne(s) hydrocarbonée(s) peuvent être substituées par un ou plusieurs groupes hydroxyles, phényles, -COOH, -C(O)OR', -OR' avec R' étant un radical alkyle en C₁ à C₅, -COCl, -OCOCl, -Cl ou -F.

Le sel halogéné peut aussi être un sel halogéné de sulfonium. Le sel halogéné peut être par exemple de formule R¹R²R³S⁺A⁻, avec A un atome d'halogène et R¹, R² et R³ étant indépendamment les uns des autres une chaîne hydrocarbonée linéaire ou ramifiée en C₁ à C₅ pouvant être substituée. En particulier, la ou les chaîne(s) hydrocarbonée(s) peuvent être substituées par un ou plusieurs groupes hydroxyles, phényles, -COOH, -C(O)OR', -OR' avec R' étant un radical alkyle en C₁ à C₅, -COCl, -OCOCl, -Cl ou -F.

L'atome d'halogène A peut être un atome de fluor, de chlore, de brome ou d'iode.

Par exemple, le solvant eutectique profond comprend au moins un sel d'ammonium quaternaire halogéné ou un sel de phosphonium quaternaire halogéné, et de préférence au moins un sel d'ammonium quaternaire halogéné.

Le DES peut en particulier comprendre un chlorure ou un bromure d'ammonium quaternaire. De préférence, le DES comprend un chlorure d'ammonium quaternaire.

En particulier, le solvant eutectique profond comprend au moins un sel halogéné choisi parmi les halogénures de choline, de N-éthyl-2-hydroxy-N,N-diméthyléthanaminium, de 2-(chlorocarbonyloxy)-N,N,N-triméthyl-ethanaminium et de N-benzyl-2-hydroxy-N,N-diméthyléthanaminium et leurs mélanges, et de préférence parmi les chlorures de choline, de N-éthyl-2-hydroxy-N,N-diméthyléthanaminium, de 2-(chlorocarbonyloxy)-N,N,N-triméthyl-ethanaminium et de N-benzyl-2-hydroxy-N,N-diméthyléthanaminium et leurs mélanges.

Les formules des sels halogénés sont représentées dans le tableau 1 dans le cas où l'atome d'halogène est un atome de chlore.

**[Tableau 1]**

| | |
|---|---|
| Chlorure de choline | 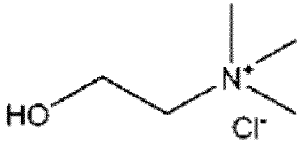 |
| Chlorure de N-éthyl-2-hydroxy-N,N-diméthyléthanaminium | 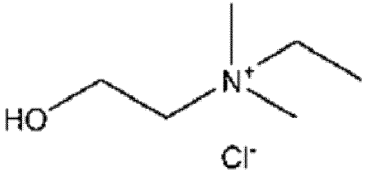 |
| Chlorure de 2-(chlorocarbonyloxy)-N,N,N-triméthyl-ethanaminium | 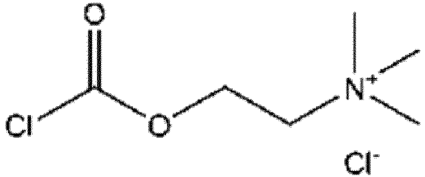 |
| Chlorure de N-benzyl-2-hydroxy-N,N-diméthyléthanaminium | 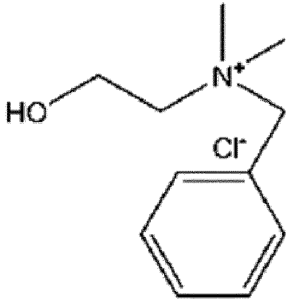 |

Selon un mode de réalisation préféré de l'invention, le solvant eutectique profond comprend au moins du chlorure de choline.

Le composé de formule (I) est un composé de formule R₁R₂R₃N avec R₁ étant un radical alkyle linéaire ou ramifié en C₁ à C₅ substitué par un ou plusieurs groupe(s) hydroxyle(s), R₂ et R₃ étant indépendamment l'un de l'autre choisis parmi un atome d'hydrogène et un radical alkyle linéaire ou ramifié en C₁ à C₅ pouvant être substitué par un ou plusieurs groupe(s) hydroxyle(s).

Le composé de formule (I) est avantageusement un composé capable de piéger des NOx. En particulier, le composé de formule (I) interagit avec les NOx, notamment par liaison chimique. Par exemple, le piégeage des NOx peut être obtenu par formation de liaison faible de type Van der Walls, liaison hydrogène, liaison ionique, ou par formation de liaison forte de type covalente, avec le composé de formule (I).

Le choix du composé de formule (I) pourrait permettre de moduler les capacités d'adsorption du mélange eutectique selon l'invention. Il est particulièrement avantageux de choisir un composé de formule (I) pouvant former une liaison chimique, par exemple une liaison forte, avec les NOx, notamment le NO₂. Il semblerait, selon les inventeurs, qu'un solvant eutectique à base d'un tel composé de formule (I) permettrait d'augmenter l'efficacité d'adsorption de ce composé de formule (I). Sans être lié par la théorie, il semblerait que la très faible tension de vapeur du liquide eutectique limiterait également le relargage des NOx adsorbés dans le DES.

En particulier, R₁ est un radical alkyle linéaire en C₁ à C₅, notamment en C₁ à C₃, substitué par un ou plusieurs groupe(s) hydroxyle(s), notamment par un groupe hydroxyle. Par exemple, R₁ peut être représenté par HO-(CH₂)_{y}- avec y compris entre 1 et 3. De préférence, R₁ est un radical n-hydroxyéthyle.

En variante, R₂ et R₃ sont indépendamment l'un de l'autre un radical alkyle linéaire ou ramifié en C₁ à C₅ substitué par un ou plusieurs groupe(s) hydroxyle(s), en particulier un radical alkyle linéaire en C₁ à C₃ substitué par un ou plusieurs groupe(s) hydroxyle(s), voire substitué par un groupe hydroxyle.

Par exemple, le composé de formule (I) peut être choisi parmi la monoéthanolamine, la diéthanolamine, la triéthanolamine, la N-méthyldiéthanolamine, la diéthyléthanolamine, la N,N-diméthyléthanolamine, la N,N-diisopropyléthanolamine, et leurs mélanges.

Par exemple, R₁, R₂ et R₃ sont indépendamment les uns des autres un radical alkyle linéaire en C₁ à C₃ substitué par un groupe hydroxyle.

En particulier, le solvant eutectique profond comprend au moins un composé de formule (I) choisi parmi la monoéthanolamine, la diéthanolamine, la triéthanolamine et leurs mélanges, et de préférence comprend au moins la triéthanolamine.

Selon un mode de réalisation préféré, le solvant eutectique profond comprend, voire est constitué, du chlorure de choline et de la triéthanolamine, le rapport molaire triéthanolamine / chlorure de choline étant de préférence égal à 2:1.

Un DES tel que décrit précédemment peut en outre comprendre, après utilisation, des gaz dissous ou adsorbés, et notamment des NOx, voire du NO₂, dissous ou adsorbés.

Le DES est généralement synthétisé par mélange du sel halogéné et du composé de formule (I), éventuellement dans un solvant adapté, comme par exemple l'eau ou l'éthanol. De préférence, ce mélange est chauffé à une température comprise entre 40°C et 80°C, notamment sous agitation, par exemple sous agitation magnétique, afin d'obtenir le DES. En particulier, le chauffage peut être poursuivi pendant 30 min à 2 h, notamment jusqu' à obtenir un liquide épaissi.

Un tel DES permet avantageusement de piéger des NOx, en particulier le NO₂.

### Utilisation du solvant eutectique profond

La présente invention se rapporte à l'utilisation d'un solvant eutectique profond (DES) tel que décrit précédemment pour piéger au moins un oxyde d'azote gazeux dit NOx.

En particulier, l'oxyde d'azote gazeux (NOx) peut être le monoxyde d'azote (NO) ou le dioxyde d'azote (NO₂), et est de préférence le dioxyde d'azote (NO₂).

Selon un mode de réalisation préféré, il s'agit de l'utilisation d'un solvant eutectique profond (DES) tel que décrit précédemment pour piéger au moins du dioxyde d'azote (NO₂).

En particulier, il s'agit de l'utilisation d'un DES comprenant au moins, voire constitué :
- de chlorure de choline, et
- de triéthanolamine,
pour piéger au moins du NO₂, le rapport molaire triéthanolamine / chlorure de choline étant de préférence égal à 2:1.

Le DES peut être utilisé selon les différents modes décrits ci-après et notamment mis en oeuvre dans un système de filtration ou dans un procédé tels que décrits ci-après. Par exemple, lors de l'utilisation, le DES peut être immobilisé sur un support solide poreux tel que détaillé ci-après.

Le DES utilisé dans l'invention permet de piéger efficacement un ou des NOx. Il est en particulier capable de piéger un ou des NOx présent(s) à des concentrations, températures et pressions représentatives de l'air ambiant. Les NOx peuvent avantageusement être piégés à partir d'un air ambiant chargé en humidité ou en CO₂.

Un autre avantage du DES selon l'invention réside dans le fait que l'adsorption des NOx y est majoritairement irréversible.

Par « adsorption majoritairement irréversible », il faut comprendre que moins de 25 % en masse des NOx adsorbés à saturation se désorbent lors d'une mise en contact avec un air non pollué.

Le DES selon l'invention peut être utilisé pour filtrer des NOx pour l'amélioration de la qualité de l'air intérieur ou extérieur. Il peut aussi être utilisé pour filtrer des effluents industriels de combustion, après refroidissement à des températures inférieures à 120 °C, de préférence à une température proche de la température ambiante. Le DES peut également être utilisé dans les capteurs de NO₂, tels que les tubes colorimétriques.

De préférence, le DES selon l'invention est utilisé pour filtrer les NO₂ afin d'améliorer la qualité de l'air intérieur, notamment de l'air confiné.

### Système de filtration

L'invention concerne également un système de filtration de fluide gazeux comportant au moins un support solide poreux et au moins un solvant eutectique profond à titre d'élément capteur d'oxyde d'azote gazeux (NOx), le solvant eutectique profond comprenant au moins :
- un sel halogéné d'ammonium, de phosphonium ou de sulfonium, et
- un composé de formule (I) R₁R₂R₃N avec

R₁ étant un radical alkyle linéaire ou ramifié en C₁ à C₅ substitué par un ou plusieurs groupe(s) hydroxyle(s),
R₂ et R₃ étant indépendamment l'un de l'autre choisis parmi un atome d'hydrogène et un radical alkyle linéaire ou ramifié en C₁ à C₅ pouvant être substitué par un ou plusieurs groupe(s) hydroxyle(s),
avec ledit solvant eutectique profond étant immobilisé sur ledit support solide poreux.

En particulier, le système de filtration de fluide gazeux comporte au moins un solvant eutectique profond tel que défini précédemment.

Le système de filtration est de préférence perméable au fluide gazeux.

Au sens de l'invention, un fluide gazeux est formé d'un composé ou d'un mélange de plusieurs composés à l'état gazeux, et peut comporter en outre des particules, voire des microparticules, en suspension. En particulier, le fluide gazeux est un mélange de plusieurs composés à l'état gazeux.

De préférence, le fluide gazeux est de l'air pollué. L'air est principalement composé d'azote, d'oxygène, et à des taux plus variables de vapeur d'eau et de dioxyde de carbone. L'air pollué, peut en outre comprendre des polluants gazeux tels que les COVs (composés organiques volatils), le monoxyde de carbone, les NOx, le dioxyde de soufre ou encore des particules, voire des microparticules, en suspension. Notamment, le fluide gazeux peut être de l'air pollué comprenant des oxydes d'azote gazeux, de préférence comprenant du dioxyde d'azote (NO₂).

Le fluide gazeux peut également être un effluent de combustion, de préférence après refroidissement à des températures inférieures à 120 °C, et plus préférentiellement à une température proche de la température ambiante. Par exemple, un tel effluent industriel peut avoir la composition suivante : O₂ (0,2-15%vol), CO (0,01 à 6%), H₂ (0,03-2%), hydrocarbures (0,005 à 1%), H₂O (1,8 à 12%), CO₂ (2 à 14 %), NOx (0,003 à 0.4%).

Le support solide poreux peut par exemple être formé d'au moins un matériau choisi parmi les zéolithes, la cellulose, le Kapok, les silices, les aluminosilicates, les matériaux polymériques de type par exemple polyester, la cellulose, les mousses métalliques comme par exemple des mousses de Al, de Cu, de Ni, ou d'acier inoxydable, les briques réfractaires notamment de bauxite, de corindon, ou de carbure de silicium, et leurs mélanges, de préférence choisi parmi la cellulose, les silices et les briques réfractaires, et plus préférentiellement est formé au moins de silice.

Par exemple, le support solide poreux peut se présenter sous une forme de particules, de fils, de fibres, de plaquettes, et de préférence de fibres.

Selon une variante préférée, le support est un support de fibres, par exemple un réseau de fibres, notamment de diamètre compris entre 0,01 et 100 µm, et plus préférentiellement un support de fibres de verre, notamment de diamètre compris entre 0,1 et 10 µm.

Selon un mode de réalisation préféré, le solvant eutectique profond comprend au moins, voire est constitué, du chlorure de choline et de la triéthanolamine, et le support solide poreux comprend des fibres, notamment de verre, voire est constitué de fibres de verre, le rapport molaire triéthanolamine / chlorure de choline étant de préférence égal à 2:1.

En particulier, le système de filtration comprend le DES et le support solide poreux dans un rapport pondéral α = mₛᵤₚₚₒᵣₜ/( mₛᵤₚₚₒᵣₜ + m_{DES}) variant de 10 à 60%, de préférence de 45% à 65% avec mₛᵤₚₚₒᵣₜ la masse du support et m_{DES} la masse de DES présente sur le support.

Le DES est généralement immobilisé sur ce support par imprégnation.

Cette imprégnation peut notamment être réalisée par immersion, soit dans le DES pur, soit dans le DES dilué. Le DES peut être dilué dans de l'eau, formant une solution aqueuse du DES. La mise en oeuvre d'une telle solution aqueuse permet avantageusement d'abaisser la viscosité du mélange à imprégner et donc de faciliter l'imprégnation du DES. Une telle étape d'imprégnation peut durer entre 1s et 12h.

De préférence, l'imprégnation est réalisée par immersion dans une solution aqueuse de DES. Par exemple, la solution aqueuse peut avoir une concentration massique en DES comprise entre 10 g.L⁻¹ et 150 g.L⁻¹.

Suite à l'imprégnation, le support imprégné obtenu peut, le cas échéant, être séché, par exemple sous vide, à une température comprise entre 50 °C et 120 °C pendant une durée de 1 min à 48 h.

L'efficacité de piégeage des NOx par le DES du système de filtration se caractérise notamment par une efficacité initiale d'adsorption de NOx η^{NOx}, voire de NO₂ η^{NO2}, supérieure à 70%, de préférence supérieure à 80% et plus préférentiellement supérieure à 85%.

Cette efficacité initiale d'adsorption caractérise l'aptitude d'un système de filtration comprenant un DES pur, c'est-à-dire un DES dénué de NOx, à piéger plus ou moins de NOx, en particulier le NO₂. Elle peut être notamment déterminée selon la méthode décrite dans les exemples ci-après.

L'efficacité de piégeage des NOx par le DES se caractérise également par la quantité totale *qₛₐₘₚ* de NOx, voire de NO₂, qui peut être piégée dans le système de filtration à saturation, en pourcentage massique de cumul de la masse du support et de celle du DES. Elle se caractérise aussi par la quantité totale *qₛₒₗᵥₐₙₜ* de NOx, voire de NO₂, qui peut être piégée dans le système de filtration à saturation, en pourcentage massique de la masse totale de DES. Ces quantités totales sont calculées par intégration de la mesure d'efficacité jusqu'à saturation.

De préférence, *qₛₐₘₚ,* mesurée pour un système de filtration selon l'invention, est supérieure à 2% en masse de NOx, voire de NO₂, de préférence supérieure à 3,5% en masse de NOx, voire de NO₂, et plus préférentiellement à 5% en masse de NOx, voire de NO₂. En variante, *qₛₒₗᵥₐₙₜ* est supérieure à 7% en masse de NOx, voire de NO₂, de préférence supérieure à 8,5% en masse de NOx, voire de NO₂, et plus préférentiellement supérieure à 10% en masse de NOx, voire de NO₂.

Avantageusement, un système de filtration comprenant un DES permettant de piéger efficacement un ou des NOx possède une efficacité initiale d'adsorption élevée en NOx, voire en NO₂, combinée à une quantité totale de NOx, voire de NO₂, piégée à saturation élevée.

Notamment, les exemples de l'invention illustrent un piégeage efficace du NO₂ par les DESs mis en oeuvre dans les systèmes de filtration selon l'invention. En particulier, l'efficacité initiale d'adsorption en NO₂ atteint 87% et la quantité totale *qₛₒₗᵥₐₙₜ* de NO₂ piégée dans le DES atteint 10,9% en masse par rapport à la masse totale de DES.

Un autre avantage du système de filtration réside dans le fait que l'adsorption des NOx par le DES est majoritairement irréversible.

Cette propriété d'adsorption majoritairement irréversible peut être caractérisée par la désorption en NOx, voire en NO₂, définie comme étant la proportion de NOx, voire de NO₂, qui se désorbe d'un DES initialement saturé en NOx, voire en NO₂. Celle-ci peut notamment être mesurée après 17h de circulation d'un air non pollué à proximité du système de filtration, voire à travers le support solide poreux du système de filtration, avec un flux d'air non-pollué de 59 L.min⁻¹.^{g}ₛₒₗᵥₐₙₜ⁻¹. En particulier, la désorption en NOx, voire en NO₂, est inférieure à 20%, de préférence inférieure à 10% et plus préférentiellement inférieure ou égale à 7%. Avantageusement, l'adsorption des NOx est majoritairement irréversible pour une température allant de 20 °C à 120°C.

Selon un mode de réalisation de l'invention, le système de filtration se présente sous la forme d'une cartouche de filtration d'air contenant ledit solvant eutectique profond immobilisé sur ledit support solide poreux, se présentant de préférence à l'état de fibres ou de particules.

### Procédé de purification

L'invention concerne également un procédé de purification d'un fluide gazeux susceptible de contenir un oxyde d'azote gazeux (NOx), ledit procédé comprenant au moins les étapes consistant à :
(a) disposer d'au moins un solvant eutectique profond immobilisé sur un support solide poreux, ledit solvant eutectique profond comprenant au moins :
   - un sel halogéné d'ammonium, de phosphonium ou de sulfonium, et
   - un composé de formule (I) R₁R₂R₃N avec

   R₁ étant un radical alkyle linéaire ou ramifié en C₁ à C₅ substitué par un ou plusieurs groupe(s) hydroxyle(s),
   R₂ et R₃ étant indépendamment l'un de l'autre choisis parmi un atome d'hydrogène et un radical alkyle linéaire ou ramifié en C₁ à C₅ pouvant être substitué par un ou plusieurs groupe(s) hydroxyle(s),
(b) mettre en contact ledit solvant eutectique profond de l'étape (a) avec ledit fluide gazeux dans des conditions propices au piégeage d'oxyde d'azote gazeux (NOx).

En particulier, le procédé met en oeuvre un solvant eutectique profond tel que défini précédemment.

Le support solide poreux mis en oeuvre dans le procédé peut aussi être tel que décrit précédemment.

Le DES peut être mis en oeuvre en étape (b) à l'état solide ou à l'état liquide, de préférence à l'état liquide.

La mise en contact à l'étape (b) est généralement obtenue par circulation du fluide gazeux à proximité du DES.

En particulier, l'étape (b) peut être mise en oeuvre par circulation du fluide gazeux à purifier à travers le support solide poreux sur lequel est immobilisé le solvant eutectique profond.

Par exemple, le solvant eutectique profond peut être mis en oeuvre sous la forme d'un système de filtration tel que décrit précédemment. En particulier, l'étape (b) peut être mise en oeuvre par circulation du fluide gazeux à purifier à travers ledit support solide poreux dudit système.

Le fluide gazeux peut être mis en circulation à travers le support solide poreux sur lequel est immobilisé le solvant eutectique profond, voire à travers l'élément capteur du système de filtration, à un débit compris entre 1 L/min/gₛₒₗᵥₐₙₜ et 1000 L/min/gₛₒₗᵥₐₙₜ, de préférence entre 10 L/min/gₛₒₗᵥₐₙₜ et 100 L/min/gₛₒₗᵥₐₙₜ.

En variante, le DES peut être en outre mis en contact avec le fluide gazeux par bullage en étape (b). Par exemple, ce bullage peut être réalisé en injectant le fluide gazeux dans du DES.

Le procédé de purification selon l'invention peut être réalisé à une température comprise entre 0 °C et 120 °C, de préférence entre 10 °C et 30 °C.

Le fluide gazeux peut avoir une concentration en volume en NOx comprise entre 0,01 ppm(v) et 100 ppm(v), de préférence entre 0,01 ppm(v) et 1 ppm(v), et en particulier une concentration en volume en NO₂ comprise entre 0,01 ppm(v) et 0,5 ppm(v). Le fluide gazeux a de préférence une pression de l'ordre de la pression atmosphérique.

Le fluide gazeux peut être un air ambiant, notamment un air pollué comprenant au moins un oxyde d'azote gazeux (NOx), et en particulier au moins du dioxyde d'azote (NO₂).

L'air ambiant peut par exemple être l'air extérieur, notamment dans une zone polluée, et par exemple lors d'un pic de pollution, ou bien l'air intérieur. De préférence, le fluide gazeux est un air ambiant d'un espace confiné.

A titre d'exemples d'espaces confinés peuvent être cités l'habitat (bureau, domicile, école) ou les transports (habitacle des véhicules automobiles, métro, gare, tunnel).

En variante, le fluide gazeux peut être un effluent industriel de combustion, après refroidissement de celui-ci à température proche de la température ambiante.

### Brève description des dessins

[Fig 1] représente la concentration en volume en NO₂ dans l'air en aval du système de filtration au cours d'un test de désorption pour un système de filtration comprenant un DES (selon l'invention) de composition 1 initialement totalement saturé, mesurée à température ambiante.
[Fig 2] représente la concentration en volume en NO₂ dans l'air en aval du système de filtration au cours d'un test de désorption pour un système de filtration comprenant de la triéthanolamine (hors invention) de composition 2 initialement totalement saturée, mesurée à température ambiante.

### Exemples

### Matériels et méthodes

Les matières premières suivantes ont été utilisées :
- Triéthanolamine commercialisée par Sigma-Aldrich,
- Chlorure de choline commercialisé par Sigma-Aldrich,
- Support en microfibres de verre commercialisé par Lydall de densité surfacique de 0,1 g/cm².

Les mesures d'adsorption en NO₂ sont réalisées à température ambiante en faisant passer à travers un système de filtration de l'air pollué à un débit de 2 L.min⁻¹. L'air pollué possède une humidité relative de 50%, une concentration en volume en CO₂ allant de 100 à 600 ppm(v), et une concentration en volume en NO₂ de 0,5 ppm(v).

La désorption du NO₂ est mesurée à température ambiante en faisant passer à travers un système de filtration de l'air non pollué à un débit de 2 L.min⁻¹, une humidité relative de 50% et une concentration en volume en CO₂ allant de 100 à 600 ppm(v).

La concentration en NO₂ est mesurée avant et après passage à travers un système de filtration à l'aide d'un analyseur de NOx par chimiluminescence AC32e (Environnement SA), permettant de mesurer la concentration de NO₂ en amont ou en aval du système de filtration, et ainsi de calculer la quantité piégée dans le système de filtration ou bien libérée par celui-ci.

### Exemple 1

### Préparation de systèmes de filtration conforme et non conformes à l'invention

### Composition 1 selon l'invention :

La triéthanolamine et le chlorure de choline sont mélangés dans un rapport molaire triéthanolamine / chlorure de choline de 2:1 pour obtenir 6,5 g de mélange. Ce mélange est ensuite chauffé à 60°C sous agitation magnétique pendant 1 heure jusqu'à obtenir un liquide visqueux transparent formant un DES. Le DES obtenu est alors dilué dans de l'eau déionisée à une concentration de 130 g.L⁻¹, formant une solution aqueuse de DES.

Pour former le système de filtration, le support de fibres de verre est immergé dans la solution aqueuse de DES pendant 2 heures sous agitation, puis séché sous vide à 105°C pendant au moins 12 heures.

### Compositions 2 et 3 hors invention :

La triéthanolamine est diluée dans de l'eau déionisée à une concentration massique de 10% (composition 2) ou 2% (composition 3). Un système de filtration est ensuite formé par immersion du support de fibres de verre dans la solution pendant 2 heures sous agitation, puis séchage sous vide à 105°C pendant au moins 12 heures.

Les systèmes de filtration obtenus comportent 54 % en masse de DES pour la composition 1, 44,7 % en masse et 16,3 % en masse de triéthanolamine respectivement pour les compositions 2 et 3, par rapport à la masse totale du système de filtration.

### Exemple 2

### Test des capacités d'adsorption des systèmes de filtration de l'exemple 1

Le tableau ci-dessous reporte les résultats obtenus pour les différents systèmes de filtration avec :
- C₀ la concentration en volume de NO₂ en amont du système de filtration,
- α = mₛᵤₚₚₒᵣₜ/( mₛᵤₚₚₒᵣₜ + m_{TEA}) ou α = mₛᵤₚₚₒᵣₜ/( mₛᵤₚₚₒᵣₜ + m_{DES}) avec mₛᵤₚₚₒᵣₜ la masse du support, m_{TEA} et m_{DES} respectivement les masses de triéthanolamine (compositions 2 et 3) et de DES (composition 1) présentes sur le support,
- η l'efficacité initiale d'adsorption, correspondant au pourcentage en nombre de molécules de NO₂ qui sont adsorbées initialement par le système de filtration, dénué de NO₂, par rapport au nombre total de molécules présentes initialement dans l'air à filtrer,
- *qₛₐₘₚ* la quantité totale de NO₂ piégé dans le système de filtration à saturation, en pourcentage massique par rapport à la masse totale du système de filtration, c'est-à-dire la masse totale du support de fibres de verre et du DES (composition 1) ou du support de fibres de verre et de la triéthanolamine (compositions 2 et 3),
- *qₛₒₗᵥₐₙₜ* la quantité totale de NO₂ piégé dans le système de filtration à saturation, en pourcentage massique par rapport à la masse du DES (composition 1) ou de la triéthanolamine (compositions 2 et 3).

**[Tableau 2]**

| Composition | 1 (selon l'invention) | 2 (comparatif) | 3 (comparatif) |
|---|---|---|---|
| Support | Fibres de verre | Fibres de verre | Fibres de verre |
| Solvant | Triéthanolamine / chlorure de choline (2:1) | Triéthanolamine (10%) | Triéthanolamine (2%) |
| C₀ (ppb(v)) | 765 | 530 | 655 |
| α (%) | 54 | 44,7 | 16,3 |
| η (%) | 87 | 68,5 | 62,2 |
| qₛₐₘₚ (%) | 5,9 | 1,6 | 1,1 |
| qₛₒₗᵥₐₙₜ (%) | 10,9 | 3,7 | 6,4 |

L'efficacité initiale d'adsorption et la quantité totale de NO₂ piégés dans le DES (composition 1 selon l'invention) sont supérieures aux valeurs obtenues pour la triéthanolamine pure (compositions 2 et 3 hors invention).

La composition 1 selon l'invention possède donc une efficacité de piégeage de NO₂ supérieure par rapport aux compositions 2 et 3 hors invention.

### Exemple 3

### Test de capacités de désorption des systèmes de filtration de l'exemple 1

Les tests de désorption sont réalisés à température ambiante sur des systèmes de filtration de composition 1 et 2 initialement saturés, comportant respectivement 3,7 mg et 2,8 mg de NO₂ adsorbés initialement.

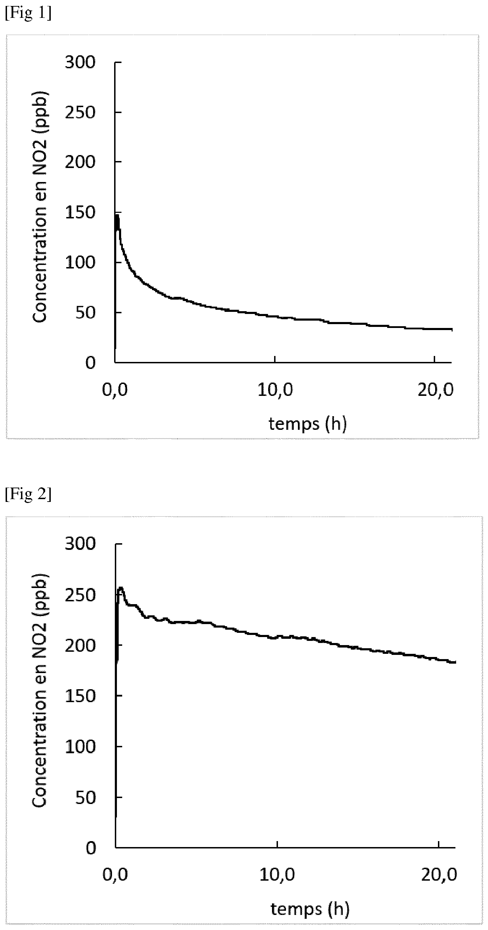

Les résultats sont reportés en figures 1 et 2, représentant la concentration en volume en NO₂ dans l'air en aval du système de filtration au cours du temps, lorsque le système de filtration est préalablement saturé et soumis à un flux d'air non pollué, dénué de NO₂, respectivement pour les compositions 1 et 2. La concentration initiale de NO₂ désorbée dans l'air en aval du système de filtration pour la composition 1 selon l'invention est de l'ordre de 150 ppb(v), inférieure à la concentration mesurée pour la composition 2 de l'ordre de 250 ppb(v).

De plus, suite à 17 heures de test de désorption, la proportion de NO₂ désorbés de la composition 1 est de 5,8% en masse par rapport à la masse de NO₂ initialement dans le système de filtration à saturation, alors qu'elle est de 28% dans le cas de la composition 2.

Ainsi, l'adsorption du NO₂ dans la composition selon l'invention est plus irréversible que dans l'exemple 2 comparatif.

La désorption, mesurée pour la composition 1 à 50°C et 80°C, est respectivement de 2,8% et 8,3% en masse de NO₂ désorbé par rapport à la masse de NO₂ initialement dans le système de filtration à saturation. Le NO₂ est donc adsorbé de façon majoritairement irréversible dans le système de filtration selon l'invention jusqu'à au moins 80°C.

### Liste des documents cités

[1] B. C. Cadoff et J. Hodgeson, « Passive Sampler for Ambient Levels of Nitrogen Dioxide », Anal. Chem., n° 55, p. 2083-2085, 1983.
[2] D. Levaggi, W. Siu, et M. Feldstein, « Quantitative Séparation of Nitric Oxide from Nitrogen Dioxide at Atmospheric Concentration Ranges2 », Env. Sc. Tech., p. 250-252, 1971.
[3] Y. Nishikawa, K. Tagushi, Y. Tsujino, et K. Kuwata, « Ion chromatographic détermination of nitrogen dioxide in the atmosphère by using a triethanolamine-coated cartridge », Elsevier Sci., vol. 370, p. 121-129, 1989.
[4] E. L. Smith, A. P. Abbott, et K. S. Ryder, « Deep Eutectic Solvents (DESs) and Their Applications », Am. Chem. Soc., n° 114, p. 11060-11082, 2014.
[5] S. Yongli, W. Guangsen, T. Xiaowei, H. Zhaohe, Y. Huawei, et Z. Luhong, « Highly Efficient Nitric Oxide Absorption by Environmentally Friendly Deep Eutectic Solvents Based on 1,3-Dimethylthiourea », Am. Chem. Soc., n° 31, p. 12439-12446, 2017.
[6] J. Dou, Y. Zhao, F. Yin, H. Li, et J. Yu, « Mechanistic Study of Sélective Absorption of NO in Flue Gas Using EG-TBAB Deep Eutectic Solvents », ACS, n° 53, p. 1031-1038, 2018.
[7] S. L. Waite, H. Li, et A. J. Page, « NO2 Solvation Structure in Choline Chloride Deep Eutectic Solvents - The Role of the Hydrogen Bond Donor », Am. Chem. Soc., no 122, p. 4336-4344, 2018.
[8] Y. Sun, M. Gao, S. Ren, Q. Zhang, Y. Hou, et W. Wu, « Highly Efficient Absorption of NO by Amine-Based Functional Deep Eutectic Solvents », ENERGY & FUELS, vol. 34, n° 1, 16 janvier 2020, pages 690-697.
[9] Z. Ghazali, N. Suhaili, et Al., « Impregnating deep eutectic solvent choline chloride:urea:polyethyleneimine onto mesoporous silica gel for carbon dioxide capture », Journal of Materials Research and Technology, vol. 9, n° 3, 13 février 2020, pages 3249-3260.

## Revendications

1. Utilisation d'un solvant eutectique profond (DES) comprenant au moins :
- un sel halogéné d'ammonium, de phosphonium ou de sulfonium, et
- un composé de formule (I) R₁R₂R₃N avec
Ri étant un radical alkyle linéaire ou ramifié en C₁ à C₅ substitué par un ou plusieurs groupe(s) hydroxyle(s),
R₂ et R₃ étant indépendamment l'un de l'autre choisis parmi un atome d'hydrogène et un radical alkyle linéaire ou ramifié en C₁ à C₅ pouvant être substitué par un ou plusieurs groupe(s) hydroxyle(s),
pour piéger au moins un oxyde d'azote gazeux dit NOx, notamment au moins du dioxyde d'azote (NO₂).

2. Utilisation selon la revendication 1, dans laquelle le rapport molaire composé(s) de formule (I) / sel(s) halogéné(s) d'ammonium, de phosphonium ou de sulfonium est compris entre 20:1 et 1:1, de préférence entre 3:1 et 1:1, et plus préférentiellement égal à 2:1.

3. Utilisation selon l'une quelconque des revendications précédentes, dans laquelle ledit solvant eutectique profond comprend au moins un sel d'ammonium quaternaire halogéné.

4. Utilisation selon l'une quelconque des revendications précédentes, dans laquelle ledit solvant eutectique profond comprend au moins un sel halogéné choisi parmi les halogénures de choline, de N-éthyl-2-hydroxy-N,N-diméthyléthanaminium, de 2-(chlorocarbonyloxy)-N,N,N-triméthyl-ethanaminium et de N-benzyl-2-hydroxy-N,N-diméthyléthanaminium et leurs mélanges, et de préférence parmi les chlorures de choline, de N-éthyl-2-hydroxy-N,N-diméthyléthanaminium, de 2-(chlorocarbonyloxy)-N,N,N-triméthyl-ethanaminium et de N-benzyl-2-hydroxy-N,N-diméthyléthanaminium et leurs mélanges, en particulier au moins du chlorure de choline.

5. Utilisation selon l'une quelconque des revendications précédentes, dans laquelle R₁ est un radical n-hydroxyéthyle.

6. Utilisation selon l'une quelconque des revendications précédentes, dans laquelle ledit solvant eutectique profond comprend au moins un composé de formule (I) choisi parmi la monoéthanolamine, la diéthanolamine, la triéthanolamine et leurs mélanges, et de préférence comprend au moins la triéthanolamine.

7. Utilisation selon l'une quelconque des revendications précédentes, dans laquelle le solvant eutectique profond comprend, voire est constitué, du chlorure de choline et de la triéthanolamine, le rapport molaire triéthanolamine / chlorure de choline étant de préférence égal à 2:1.

8. Système de filtration de fluide gazeux comportant au moins un support solide poreux et au moins un solvant eutectique profond, en particulier tel que défini dans l'une quelconque des revendications 1 à 7, à titre d'élément capteur d'oxyde d'azote gazeux (NOx), le solvant eutectique profond comprenant au moins :
- un sel halogéné d'ammonium, de phosphonium ou de sulfonium, et
- un composé de formule (I) R₁R₂R₃N avec
R₁ étant un radical alkyle linéaire ou ramifié en C₁ à C₅ substitué par un ou plusieurs groupe(s) hydroxyle(s),
R₂ et R₃ étant indépendamment l'un de l'autre choisis parmi un atome d'hydrogène et un radical alkyle linéaire ou ramifié en C₁ à C₅ pouvant être substitué par un ou plusieurs groupe(s) hydroxyle(s),
avec ledit solvant eutectique profond étant immobilisé sur ledit support solide poreux.

9. Système selon la revendication 8, dans lequel ledit support solide poreux est formé d'au moins un matériau choisi parmi les zéolithes, la cellulose, le Kapok, les silices, les aluminosilicates, les matériaux polymériques de type par exemple polyester, la cellulose, les mousses métalliques comme par exemple des mousses de Al, de Cu, de Ni, ou d'acier inoxydable, les briques réfractaires notamment de bauxite, de corindon, ou de carbure de silicium, et leurs mélanges, de préférence choisi parmi la cellulose, les silices et les briques réfractaires, et plus préférentiellement est formé au moins de silice.

10. Système selon l'une quelconque des revendications 8 à 9, dans lequel ledit support solide poreux se présente sous une forme de particules, de fils, de fibres, de plaquettes, et de préférence de fibres.

11. Système selon l'une quelconque des revendications 8 à 10, dans lequel le solvant eutectique profond comprend au moins, voire est constitué, du chlorure de choline et de la triéthanolamine, et le support solide poreux comprend des fibres, notamment de verre, voire est constitué de fibres de verre, le rapport molaire triéthanolamine / chlorure de choline étant de préférence égal à 2:1.

12. Système selon l'une quelconque des revendications 8 à 11, **caractérisé en ce qu'**il se présente sous la forme d'une cartouche de filtration d'air contenant ledit solvant eutectique profond immobilisé sur ledit support solide poreux, se présentant de préférence à l'état de fibres ou de particules.

13. Procédé de purification d'un fluide gazeux susceptible de contenir un oxyde d'azote gazeux (NOx), ledit procédé comprenant au moins les étapes consistant à :
(a) disposer d'au moins un solvant eutectique profond, en particulier tel que défini dans l'une des revendications 1 à 7, immobilisé sur un support solide poreux, ledit solvant eutectique profond comprenant au moins :
- un sel halogéné d'ammonium, de phosphonium ou de sulfonium, et
- un composé de formule (I) R₁R₂R₃N avec
R₁ étant un radical alkyle linéaire ou ramifié en C₁ à C₅ substitué par un ou plusieurs groupe(s) hydroxyle(s),
R₂ et R₃ étant indépendamment l'un de l'autre choisis parmi un atome d'hydrogène et un radical alkyle linéaire ou ramifié en C₁ à C₅ pouvant être substitué par un ou plusieurs groupe(s) hydroxyle(s),
(b) mettre en contact ledit solvant eutectique profond de l'étape (a) avec ledit fluide gazeux dans des conditions propices au piégeage d'oxyde d'azote gazeux (NOx).

14. Procédé selon la revendication 13, le solvant eutectique profond étant mis en oeuvre sous la forme d'un système de filtration selon l'une quelconque des revendications 8 à 12, l'étape (b) étant en particulier mise en oeuvre par circulation du fluide gazeux à purifier à travers ledit support solide poreux dudit système.

15. Procédé selon l'une quelconque des revendications 13 à 14, dans lequel le fluide gazeux est un air ambiant, notamment un air pollué comprenant au moins un oxyde d'azote gazeux (NOx), et en particulier au moins du dioxyde d'azote (NO₂).

## Patentansprüche

1. Verwendung eines stark eutektischen Lösungsmittels (DES), das mindestens umfasst:
- ein halogeniertes Ammonium-, Phosphonium- oder Sulfoniumsalz und
- eine Verbindung mit der Formel (I) R₁R₂R₃N, worin R₁ ein geradkettiger oder verzweigter C₁- bis C₅-Alkylrest ist, der durch eine oder mehrere Hydroxylgruppe(n) substituiert ist,
R₂ und R₃ unabhängig voneinander gewählt sind unter einem Wasserstoffatom und einem geradkettigen oder verzweigten C₁- bis C₅-Alkylrest, der durch eine oder mehrere Hydroxylgruppe(n) substituiert sein kann,
um mindestens ein gasförmiges Stickstoffoxid, NOx genannt, insbesondere mindestens Stickstoffdioxid (NO₂), zu fangen.

2. Verwendung nach Anspruch 1, bei der das Molverhältnis Verbindung(en) mit der Formel (I)/halogenierte Ammonium-, Phosphonium- oder Sulfoniumsalz(e) zwischen 20:1 und 1:1, bevorzugt zwischen 3:1 und 1:1 und noch bevorzugter 2:1 beträgt.

3. Verwendung nach einem der vorhergehenden Ansprüche, bei der das stark eutektische Lösungsmittel mindestens ein halogeniertes quartäres Ammoniumsalz umfasst.

4. Verwendung nach einem der vorhergehenden Ansprüche, bei der das stark eutektische Lösungsmittel mindestens ein halogeniertes Salz umfasst, das gewählt ist unter den Halogeniden von Cholin, von N-ethyl-2-hydroxy-N,N-dimethylethanaminium, von 2-(Chlorcarbonyloxy)-N,N,N-trimethyl-ethanaminium und von N-benzyl-2-hydroxy-N,N-dimethylethanaminium und ihren Mischungen und bevorzugt unter den Chloriden von Cholin, von N-ethyl-2-hydroxy-N,N-dimethylethanaminium, von 2-(Chlorcarbonyloxy)-N,N,N-trimethyl-ethanaminium und von N-benzyl-2-hydroxy-N,N-dimethylethanaminium und ihren Mischungen, insbesondere mindestens Cholinchlorid.

5. Verwendung nach einem der vorhergehenden Ansprüche, bei der R₁ ein n-Hydroxyethyl-Rest ist.

6. Verwendung nach einem der vorhergehenden Ansprüche, bei der das stark eutektische Lösungsmittel mindestens eine Verbindung mit der Formel (I) umfasst, die unter Monoethanolamin, Diethanolamin, Triethanolamin und ihren Mischungen gewählt ist und bevorzugt mindestens Triethanolamin umfasst.

7. Verwendung nach einem der vorhergehenden Ansprüche, bei der das stark eutektische Lösungsmittel Cholinchlorid und Triethanolamin umfasst oder daraus besteht, wobei das Molverhältnis Triethanolamin/Cholinchlorid bevorzugt 2:1 beträgt.

8. System zur Filtration eines gasförmigen Fluids, das mindestens einen porösen festen Träger und mindestens ein stark eutektisches Lösungsmittel wie in einem der Ansprüche 1 bis 7 definiert als Sensorelement für gasförmiges Stickstoffoxid (NOx) beinhaltet, wobei das stark eutektische Lösungsmittel mindestens umfasst:
- ein halogeniertes Ammonium-, Phosphonium- oder Sulfoniumsalz und
- eine Verbindung mit der Formel (I) R₁R₂R₃N, worin R₁ ein geradkettiger oder verzweigter C₁- bis C₅-Alkylrest ist, der durch eine oder mehrere Hydroxylgruppe(n) substituiert ist,
R₂ und R₃ unabhängig voneinander gewählt sind unter einem Wasserstoffatom und einem geradkettigen oder verzweigten C₁- bis C₅-Alkylrest, der durch eine oder mehrere Hydroxylgruppe(n) substituiert sein kann,
wobei das stark eutektische Lösungsmittel auf dem porösen festen Träger immobilisiert ist.

9. System nach Anspruch 8, bei dem der poröse feste Träger aus mindestens einem Material gebildet ist, das unter den Zeolithen, Cellulose, Kapok, den Siliciumdioxiden, den Alumosilikaten, den Polymermaterialien beispielsweise vom Polyestertyp, Cellulose, den Metallschäumen wie beispielsweise Schäumen von Al, Cu, Ni oder Edelstahl, den feuerfesten Steinen, insbesondere von Bauxit, von Korund oder von Siliciumcarbid, und ihren Mischungen gewählt ist, bevorzugt unter Cellulose, den Siliciumdioxiden und den feuerfesten Steinen gewählt ist und noch bevorzugter mindestens aus Siliciumdioxid gebildet ist.

10. System nach einem der Ansprüche 8 bis 9, bei dem der poröse feste Träger in Form von Partikeln, Fäden, Fasern, Plättchen und bevorzugt Fasern vorliegt.

11. System nach einem der Ansprüche 8 bis 10, bei dem das stark eutektische Lösungsmittel mindestens Cholinchlorid und Triethanolamin umfasst oder daraus besteht und der poröse feste Träger Fasern, insbesondere aus Glas, umfasst oder aus Glasfasern besteht, wobei das Molverhältnis Triethanolamin/Cholinchlorid bevorzugt 2:1 beträgt.

12. System nach einem der Ansprüche 8 bis 11, **dadurch gekennzeichnet, dass** es in Form einer Luftfilterpatrone vorliegt, die das stark eutektische Lösungsmittel enthält, das auf dem porösen festen Träger immobilisiert ist, wobei es bevorzugt im Faser- oder Partikelzustand vorliegt.

13. Verfahren zur Reinigung eines gasförmigen Fluids, das ein gasförmiges Stickstoffoxid (NOx) enthalten kann, wobei das Verfahren mindestens die folgenden Schritte umfasst:
(a) Bereitstellen mindestens eines stark eutektischen Lösungsmittels wie in einem der Ansprüche 1 bis 7 definiert, das auf einem porösen festen Träger immobilisiert ist, wobei das stark eutektische Lösungsmittel mindestens umfasst:
- ein halogeniertes Ammonium-, Phosphonium- oder Sulfoniumsalz und
- eine Verbindung mit der Formel (I) R₁R₂R₃N, worin
R₁ ein geradkettiger oder verzweigter C₁- bis C₅-Alkylrest ist, der durch eine oder mehrere Hydroxylgruppe(n) substituiert ist,
R₂ und R₃ unabhängig voneinander gewählt sind unter einem Wasserstoffatom und einem geradkettigen oder verzweigten C₁- bis C₅-Alkylrest, der durch eine oder mehrere Hydroxylgruppe(n) substituiert sein kann,
(b) Kontaktieren des stark eutektischen Lösungsmittels von Schritt (a) mit dem gasförmigen Fluid unter für das Fangen von gasförmigem Stickstoffoxid (NOx) günstigen Bedingungen.

14. Verfahren nach Anspruch 13, bei dem das stark eutektische Lösungsmittel in Form eines Filtrationssystems nach einem der Ansprüche 8 bis 12 eingesetzt wird, wobei der Schritt (b) insbesondere durch Zirkulation des zu reinigenden gasförmigen Fluids durch den porösen festen Träger des Systems hindurch ausgeführt wird.

15. Verfahren nach einem der Ansprüche 13 bis 14, bei dem das gasförmige Fluid Umgebungsluft ist, insbesondere eine verunreinigte Luft, die mindestens ein gasförmiges Stickstoffoxid (NOx) und insbesondere mindestens Stickstoffdioxid (NO₂) umfasst.

## Claims

1. Use of a deep eutectic solvent (DES) comprising at least:
- one halogenated ammonium, phosphonium or sulfonium salt, and
- one compound of formula (I) R₁R₂R₃N, with
R₁ being a linear or branched C₁ to C₅ alkyl radical substituted by one or more hydroxyl groups,
R₂ and R₃ being selected independently of one another from a hydrogen atom and a linear or branched C₁ to C₅ alkyl radical which may be substituted by one or more hydroxyl groups,
for trapping at least one gaseous nitrogen oxide "NOx", in particular at least nitrogen dioxide (NO₂).

2. Use according to Claim 1, in which the compound(s) of formula (I)/halogenated ammonium, phosphonium or sulfonium salt(s) molar ratio is between 20:1 and 1:1, preferably between 3:1 and 1:1, and more preferentially equal to 2:1.

3. Use according to either one of the preceding claims, in which said deep eutectic solvent comprises at least one halogenated quaternary ammonium salt.

4. Use according to any one of the preceding claims, in which said deep eutectic solvent comprises at least one halogenated salt selected from halides of choline, of N-ethyl-2-hydroxy-N,N-dimethylethanaminium, of 2-(chlorocarbonyloxy)-N,N,N-trimethylethanaminium and of N-benzyl-2-hydroxy-N,N-dimethylethanaminium, and mixtures thereof, and preferably from chlorides of choline, of N-ethyl-2-hydroxy-N,N-dimethylethanaminium, of 2-(chlorocarbonyloxy)-N,N,N-trimethylethanaminium and of N-benzyl-2-hydroxy-N,N-dimethylethanaminium, and mixtures thereof, in particular at least choline chloride.

5. Use according to any one of the preceding claims, in which R₁ is an n-hydroxyethyl radical.

6. Use according to any one of the preceding claims, in which said deep eutectic solvent comprises at least one compound of formula (I) selected from monoethanolamine, diethanolamine, triethanolamine, and mixtures thereof, and preferably comprises at least triethanolamine.

7. Use according to any one of the preceding claims, in which the deep eutectic solvent comprises, or even consists of, choline chloride and triethanolamine, the triethanolamine/choline chloride molar ratio preferably being equal to 2:1.

8. Gaseous fluid filtration system comprising at least one porous solid support and at least one deep eutectic solvent, in particular such as defined in any one of Claims 1 to 7, as gaseous nitrogen oxide (NOx) trapping element, the deep eutectic solvent comprising at least:
- one halogenated ammonium, phosphonium or sulfonium salt, and
- one compound of formula (I) R₁R₂R₃N, with
R₁ being a linear or branched C₁ to C₅ alkyl radical substituted by one or more hydroxyl groups,
R₂ and R₃ being selected independently of one another from a hydrogen atom and a linear or branched C₁ to C₅ alkyl radical which may be substituted by one or more hydroxyl groups,
with said deep eutectic solvent being immobilized on said porous solid support.

9. System according to Claim 8, in which said porous solid support is formed of at least one material selected from zeolites, cellulose, kapok, silicas, aluminosilicates, polymeric materials of for example polyester type, cellulose, metal foams such as for example Al, Cu, Ni or stainless steel foams, refractory bricks in particular of bauxite, corundum or silicon carbide, and mixtures thereof, preferably selected from cellulose, silicas and refractory bricks, and more preferentially is formed at least of silica.

10. System according to either one of Claims 8 and 9, in which said porous solid support is in the form of particles, yarns, fibres, platelets, and preferably of fibres.

11. System according to any one of Claims 8 to 10, in which the deep eutectic solvent comprises at least, or even consists of, choline chloride and triethanolamine, and the porous solid support comprises fibres, in particular glass fibres, or even consists of glass fibres, the triethanolamine/choline chloride molar ratio preferably being equal to 2:1.

12. System according to any one of Claims 8 to 11, **characterized in that** it is in the form of an air filtration cartridge containing said deep eutectic solvent immobilized on said porous solid support, preferably being in the form of fibres or particles.

13. Process for purifying a gaseous fluid that is liable to contain a gaseous nitrogen oxide (NOx), said process comprising at least the steps consisting in:
(a) providing at least one deep eutectic solvent, in particular as defined in one of Claims 1 to 7, immobilized on a porous solid support, said deep eutectic solvent comprising at least:
- one halogenated ammonium, phosphonium or sulfonium salt, and
- one compound of formula (I) R₁R₂R₃N, with
R₁ being a linear or branched C₁ to C₅ alkyl radical substituted by one or more hydroxyl groups,
R₂ and R₃ being selected independently of one another from a hydrogen atom and a linear or branched C₁ to C₅ alkyl radical which may be substituted by one or more hydroxyl groups,
(b) bringing said deep eutectic solvent of step (a) into contact with said gaseous fluid under conditions conducive to the trapping of gaseous nitrogen oxide (NOx).

14. Process according to Claim 13, the deep eutectic solvent being employed in the form of a filtration system according to any one of Claims 8 to 12, step (b) being in particular implemented by circulation of the gaseous fluid to be purified through said porous solid support of said system.

15. Process according to either one of Claims 13 and 14, in which the gaseous fluid is an ambient air, particularly a polluted air comprising at least one gaseous nitrogen oxide (NOx), and in particular at least nitrogen dioxide (NO₂).
